# EUROPÄISCHE PATENTANMELDUNG

(11) **EP 0 538 234 A1**
(43) Veröffentlichungstag der Anmeldung: **21.04.1993**
(21) Anmeldenummer: 92890203.0
(22) Anmeldetag: 23.09.1992
(51) Int. Cl.: B23B 31/16, B23B 31/40, B23B 33/00

(54) **Haltevorrichtung**

(30) Priorität: 26.09.1991 AT 1936/91
(71) Anmelder: Lederhilger, Günther, A-8062 Kumberg (AT)
(72) Erfinder: Lederhilger, Günther, A-8062 Kumberg (AT)
(74) Vertreter: Kliment, Peter

(57) **Zusammenfassung**

Um bei einer solchen Haltevorrichtung einen exakten Sitz des zu haltenden Teiles sicherzustellen, ist vorgesehen, daß zumindest ein Bereich der Zylindermantelfläche (15, 34) der Haltevorrichtung, der sich im wesentlichen über den gesamten Kreisumfang erstreckt und gegengleich zu einem Abschnitt der Zylindermantelfläche (16, 35) des zu haltenden Teiles (14, 14') ausgebildet ist, als Paßfläche für den entsprechenden Abschnitt der Zylindermantelfläche (16, 34) des zu haltenden Teiles (14, 14') ausgebildet ist.

## Beschreibung

Die Erfindung bezieht sich auf eine Haltevorrichtung für drehfest einzuspannende Teile, insbesondere Werkstücke oder Werkzeuge, welche Haltevorrichtung eine Zylindermantelfläche aufweist, die im wesentlichen gegengleich zu Abschnitten einer Zylindermantelfläche des zu haltenden Teiles ausgebildet ist, wobei die Haltevorrichtung Druckkörper aufweist, die in Bohrungen gehalten, gegen deren Wände abgedichtet und gegen die Zylindermantelfläche des zu haltenden Teiles verschiebbar sind, welche Bohrungen in Umfangsrichtung der Haltevorrichtung über diese verteilt angeordnet sind und die Bohrungen mit einem von einem Druckmedium erfüllten Raum verbunden sind.

Solche Haltevorrichtungen wurden z.B. durch die AT-PS 224 414 bekannt.

Gemäß dem bekannten Vorschlag, ist zwischen der Mantelfläche der Haltevorrichtung und der im wesentlichen gegengleichen Mantelfläche des zu haltenden Werkstückes ein großer Spalt vorgesehen, sodaß die Druckkörper, von denen je zwei auf einer Mantellinie der Haltevorrichtung angeordnet sind, nicht nur für den entsprechenden Reibungsschluß zwischen der Haltevorrichtung und dem zu haltenden Werkstück sorgen, sondern auch dessen Zentrierung übernehmen müssen.

Letzteres läßt sich jedoch aufgrund gegebenenfalls unterschiedlicher Reibungswiderstände zwischen den Abdichtungen der einzelnen Druckkörper und den Wänden der sie aufnehmenden Bohrungen nicht mit der für viele Anwendungen erforderlichen Genauigkeit sicherstellen.

Eine ähnliche Haltevorrichtung wurden z.B. durch die AT-PS 389 260 bekannt. Bei dieser bekannten Haltevorrichtung ist en hohler Dorn vorgesehen, auf den der zu haltende, eine entsprechende Bohrung aufweisende Teil aufschiebbar ist. In zwei axial voneinander beabstandeten, sich in Umfangsrichtung erstreckenden Reihen von Bohrungen, deren Achsen radial verlaufen, sind als kugeln ausgebildete Druckkörper gehalten. Diese werden von zwei, abschnittsweise eine kegelförmige Mantelfläche aufweisenden Steuerkörpern gesteuert, die auf einer Stange verschiebbar geführt sind und die kegelförmigen Mantelflächen dieser Steuerkörper sich gegen das freie Ende der Stange zu im gleichen Ausmaß verjüngen. Zwischen den beiden Steuerkörpern ist eine Druckfeder angeordnet.

Der vom freien Ende der Stange abgekehrte Steuerkörper ist mittels einer an dessen größerer Stirnseite anpreßbaren Hülse entgegen der kraft der Feder verschiebbar, wodurch die an seiner Kegelmantelfläche anliegenden Druckkörper nach außen gedrängt werden. Dabei überträgt sich über die Feder die über die Hülse auf den einen Steuerkörper aufgebrachte kraft auch auf den zweiten Steuerkörper, sodaß auch dieser die an ihm anliegenden Druckkörper nach außen gedrängt werden. Dabei ergibt sich über die Feder eine Kopplung durch die eine weitgehend gleichmäßige Verteilung der Spannkräfte erreicht wird.

Allerdings ergibt sich bei dieser bekannten Lösung der Nachteil, daß die Wand der Bohrung des zu haltenden Teiles nicht an der Außenseite des Dornes der Haltevorrichtung anliegt, sondern ausschließlich an den Druckkörpern, die insbesondere aus relativ weichem Material, wie z.B. aus Aluminium hergestellten aufzuspannenden Teilen entsprechende Druckmarken verursachen. Außerdem ist die Genauigkeit der Aufspannung in starkem Ausmaß von den unvermeidlichen Maßabweichungen der als Druckkörper dienenden kugeln und den Abweichungen der beiden Kegelmantelflächen der beiden Steuerkörper abhängig. Aus diesem Grunde eignet sich die bekannte Haltevorrichtung nicht Anwendungen, bei denen ein hohes Maß an Genauigkeit gefordert wird.

Weiters wurde durch die EP-A2-344 761 eine Haltevorrichtung bekannt, bei dem auf einen Dorn eine elastisch verformbare Hülse aufgeschoben ist, die in ihren beiden Endbereichen gegen den abgedichtet ist, wobei zwischen der Mantelfläche des Dornes und der Innenwand der Hülse ein Spalt verbleibt, der mit einem Druckmedium beaufschlagbar ist. Durch eine entsprechende Beaufschlagung dieses Spaltes mit einem Druckmedium kommt es zu einer Aufweitung der Hülse und damit zu einem Reibungsschluß der Hülse mit der Wand einer Aufnahme Bohrung des zu haltenden Teiles.

Bei dieser Lösung läßt sich zwar ein hohe Genauigkeit der Aufspannung erzielen, doch ergibt sich der Nachteil einer nur sehr geringen Standfestigkeit der Haltevorrichtung, da eben die Hülse nach relativ kurzer Zeit bricht und ersetzt werden muß. Dies ist insbesondere bei einer Anwendung zur Herstellung von Teilen in einer Massenfertigung von Nachteil, da beim Auswechseln der Hülse bzw. der gesamten Haltevorrichtung ein Produktionsstillstand nicht zu vermeiden ist.

Ziel der Erfindung ist es, diese Nachteile zu vermeiden und eine Haltevorrichtung der eingangs erwähnten Art vorzuschlagen, die eine sehr genaue Aufspannung der zu haltenden Teile ermöglicht und sich durch eine lange Standzeit auszeichnet.

Erfindungsgemäß wird dies dadurch erreicht, daß zumindest ein Bereich der Zylindermantelfläche der Haltevorrichtung, der sich im wesentlichen über den gesamten Kreisumfang erstreckt und gegengleich zu einem Abschnitt der Zylindermantelfläche des zu haltenden Teiles ausgebildet ist, als Paßfläche für den entsprechenden Abschnitt der Zylindermantelfläche des zu haltenden Teiles ausgebildet ist.

Durch die zumindest bereichsweise Ausbildung der Mantelfläche der Haltevorrichtung als Paßfläche ist eine sehr genaue Zentrierung des zu haltenden Teiles sichergestellt, wobei die Druckkörper lediglich für den entsprechenden Kraftschluß sorgen. Dabei ergibt sich durch die Trennung der Aufgaben; einerseits die Zentrierung und andererseits die Aufbringung eines ausreichenden Reibungsschlusses; der Vorteil einer sehr robusten Ausbildung der Haltevorrichtung und damit ein eine entsprechend lange Standzeit derselben.

Nach einem weiteren Merkmal der Erfindung kann vorgesehen sein, daß die Bohrungen, in denen die Druckkörper gehalten sind, in einem Bereich der Haltevorrichtung vorgesehen sind, der dem als Paßfläche ausgebildeten Bereich der Mantelfläche benachbart ist.

Dadurch wird sichergestellt, daß die meist sehr fein bearbeitete Fläche des zu haltenden Teiles nicht durch die Druckkörper beschädigt wird. Dabei kann der Bereich, in dem die Druckkörper angeordnet sein, gegenüber den die Paßfläche aufweisenden Bereich abgesetzt sein.

In diesem Zusammenhang kann bei einer erfindungsgemäßen Haltevorrichtung, bei der die Druckköper über die sie umgebende Mantelfläche herausragen, weiters vorgesehen sein, daß die Druckkörper eine in ihrer Mantelfläche eingearbeitete Nut aufweisen, in die ein Blechstreifen eingreift.

Auf diese Weise wird auf einfache Weise ein Herausfallen der Haltekörper und ein Verdrehen derselben verhindert.

Um ein rasches Aufspannen von Werkstücken in einer definierten axialen Lage zu ermöglichen, wird nach einem weiteren Merkmal der Erfindung vorgeschlagen, daß ein Anschlag zur Begrenzung der Überdeckung des zu haltenden Teiles und der Haltevorrichtung vorgesehen ist.

Dadurch kann das aufzuspannende Werkstück einfach bis zu diesem Anschlag aufgeschoben werden und danach in dieser Lage mittels der Druckkörper fixiert wrden.

Die Erfindung wird nun anhand der Zeichnung näher erläutert. Dabei zeigen:
Fig. 1 einen Schnitt durch eine erste Ausführungsform einer erfindungsgemäßen Haltevorrichtung,
Fig. 2 eine Stirnansicht der Haltevorrichtung nach der Fig. 1, Fig. 3 einen Schnitt entlang der Linie A-A in der Fig. 1,
Fig. 4 bis 7 schematisch das Aufspannen und Abziehen eines Teiles von der Haltevorrichtung nach den Fig. 1 bis 3, und
Fig. 8 ein weiteres Ausführungsbeispiel einer Haltevorrichtung.

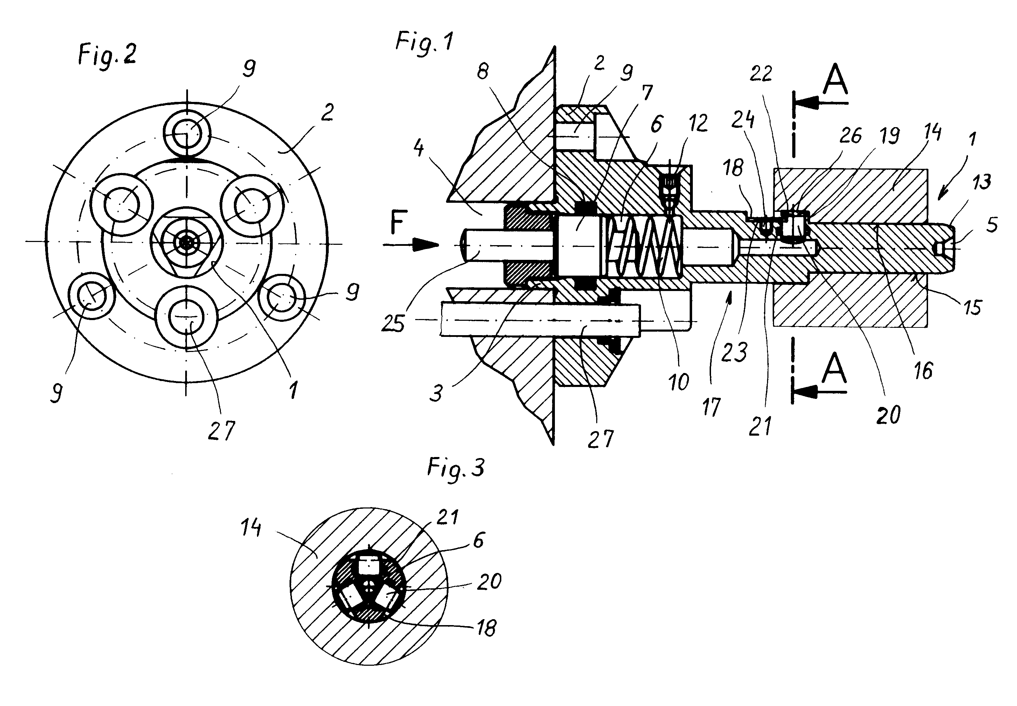

Die Haltevorichtung nach den Fig. 1 bis 3 weist einen Dorn 1 auf, der einstückig mit einer Aufspannplatte 2 verbunden ist, die mittels nicht dargestellter, in die Bohrungen 9 einsetzbarer Schrauben z.B. an einer Werkzeugmaschine, z.B. einer Drehbank, befestigbar ist. Dabei ist die Aufspannplatte 2 mit einem Zentrieransatz 3 versehen, der in eine entsprechende Bohrung 4 der Werkzeugmaschine eingreift.

Der Dorn 1 ist an seiner freien Stirnseite mit einer Zentrierbohrung 5 zur Aufnahme eines Körners versehen.

An der freien Stirnseite der Aufspannplatte 2 ist eine zentrale Bohrung 6 angeordnet, in der ein Kolben 7 verschiebbar gehalten und mittels der Dichtung 8 gegen die Wand dieser Bohrung 6 abgedichtet ist. Dieser Kolben 7 ist mittels einer Feder 10 gegen einen Anschlag 11, der in die Bohrung 6 eingeschraubt ist, vorgespannt.

Der zwischen dem Ende der abgestuften Sackbohrung 6 und dem Kolben 7 verbleibende Raum ist von einem Fluid, vorzugsweise Drucköl erfüllt, das vor dem Einsetzen des Kolbens 7 in die Bohrung 6 gefüllt wurde, wobei während des Einschiebens des Kolbens das Entlüftungsventil 12 eine kontrollierte Leckage freigibt und über die allenfalls eingeschlossene Luft entweichen kann. Das Entlüftungsventil kann auch durch einen einfachen Dichtsitz gebildet sein, der mit einem als Kugel ausgebildeten Ventilkörper zusammenwirkt, der mittels einer Schraube, z.B. einer Madenschraube gegen den Ventilsitz preßbar ist. Damit kann bei der erstmaligen Füllung oder auch im Bedarfsfall eine Entlüftung des den Kolben 7 aufnehmenden Raumes durchgeführt werden.

Der Dorn weist in Bereich seines freien Endes eine kegelige Auflauffläche 13 auf, die zum leichteren Aufschieben eines zu haltenden Teiles 14 dient und in eine als Paßfläche vorgesehene Mantelfläche 15 übergeht, die beim dargestellten Ausführungsbeispiel als zylindrische Fläche ausgebildet ist, aber auch z.B. als Kegelmantelfläche ausgebildet sein könnte.

Der zu haltende Teil 14 weist eine Bohrung 16 auf, die mit der als Paßfläche ausgebildeten Mantelfläche 15 des Dornes 1 einen Passungssitz ergibt, z.B. einen Schiebesitz. Die Qualität dieses Passungssitzes ist in Abhängigkeit von der angestrebten Rundlaufgenauigkeit und den als zulässig erachteten Toleranzen gewählt.

An diesen die als Paßfläche ausgebildet Mantelfläche 15 aufweisenden Bereich des Dornes 1 schließt sich ein von diesem abgesetzter Bereich an, der einen größeren Durchmesser aufweist und mit regelmäßig über den Umfang verteilt angeordneten Abflachungen 18 versehen ist, (Fig. 3).

In diesen Abflachungen 18 sind radiale Bohrungen 19 angeordnet die in die zentrale Bohrung 6 münden und in denen zylindrische Druckkörper 20 verschiebbar gehalten sind. Diese sind mittels Dichtungen 21 gegen die Wände der Bohrungen 19 abgedichtet.

Diese Druckkörper sind in ihrem über die Abflachungen 18 vorragenden Abschnitten mit einer entlang einer Sehne ihres Querschnitttes verlaufenden Nuten 22 versehen, in die jeweils eine Blattfeder 23 eingreift, die den Druckkörper 20 gegen dessen in den Dorn 1 eingeschobene Stellung vorspannt und mittels Schrauben 24 gehalten sind.

Durch Druck auf die mit dem Kolben 7 verbundene Kolbenstange 25 wird der Druck im Inneren der Bohrung 6 erhöht, wodurch die drei Druckkörper 20 entgegen der kraft der Blattfedern 23 nach außen gedrängt werden und bei aufgeschobenem zu haltenden Teil 14 gegen die Wand der in diesem Bereich erweiterten Bohrung 26 dieses Teiles 14 gepreßt werden, wodurch es zu einem entsprechenden Reibungsschluß zwischen den Stirnflächen der Druckkörper 20 und der Wand der Bohrung 26 des Teiles 14 kommt. Damit kann auf diesen ein entsprechendes Drehmoment übertragen werden.

Dabei ist aufgrund der als Paßfläche bearbeiteten Mantelfläche 15 des Dornes 1 und der entsprechenden Bohrung 16 des zu haltenden Teiles 14 ein exakter Sitz des letzteren gewährleistet, wodurch nach einer entsprechenden Bearbeitung der äußeren Mantelfläche des Teiles 14 diese genau koaxial zur Bohrung 16 desselben hergestellt werden kann.

Wie aus der Fig. 2 zu ersehen ist, ist die Aufspannplatte 2 mit drei gleichmäßig in Umfangsrichtung verteilt angeordneten Bohrungen 9 zur Aufnahme von Befestigungsschrauben und mit drei gegenüber diesen versetzt angeordneten Auswerfern 27 versehen, die in axialer Richtung des Dornes 1 verschiebbar sind. Dabei durchsetzen die Auswerfer 27 die Aufspannplatte 2.

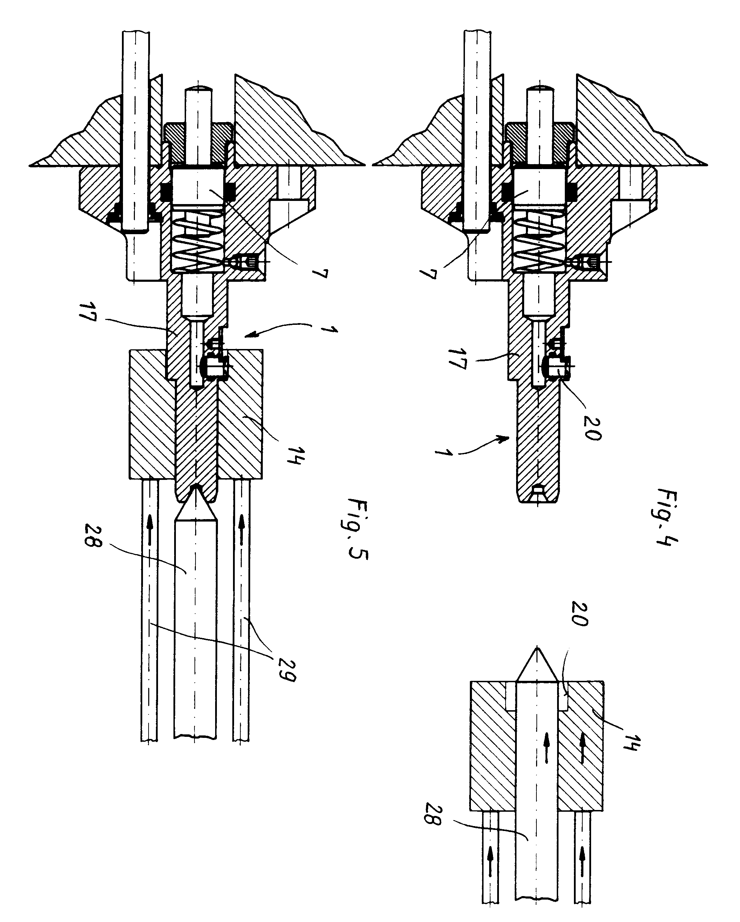

Aus den Fig. 4 bis 7 sind die einzelnen Schritte bei der Bearbeitung eines Teiles 14 zu ersehen.

Der auf einen z.B. in einen Reitstock gehaltenen Körner 28 aufgesteckte Teil 14 wird mit diesem an die Haltevorrichtung herangeführt (Fig. 4) und auf den Dorn 1 mit Hilfe von Schubarmen 29 aufgeschoben, bis der Teil 14 an der den Bereich 17 des Dornes begrenzenden Schulter desselben ansteht. Dabei dringt der Körner 28 in die Zentrierbohrung 5 des Dornes 1 ein (Fig. 5).

Danach wird der Kolben 7 in Richtung des Pfeiles F bewegt und dadurch der Druck im Inneren der Bohrung 6 erhöht, wodurch die Druckkörper 20 nach außen gedrängt werden und es zu einem Reibungsschluß zwischen den Druckkörpern 20 und der Wand der Bohrung 26 des Teiles 14 kommt. (Fig. 5)

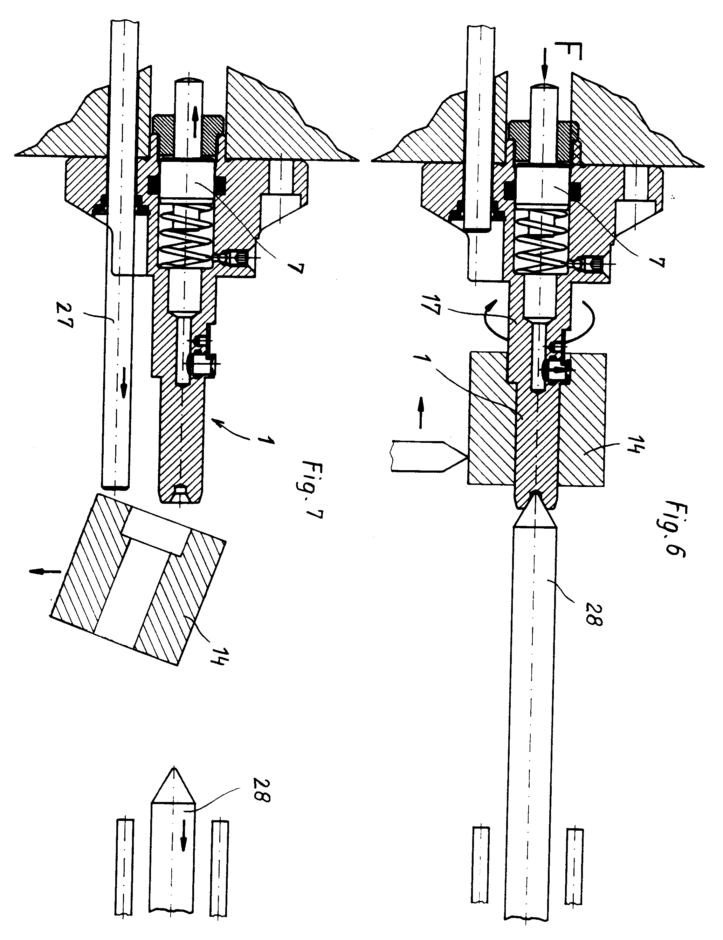

Anschließend werden die Schubarme 29 zurückgezogen und die äußere Mantelfläche des Teiles 4 bearbeitet (Fig. 6).

Anschließend wird der Kolben 7 zurückgezogen und dadurch die Druckkörper 20 in den Dorn 1 eingezogen, wodurch der Reibungsschluß zwischen der Bohrung 26 des Teiles 14 und den Druckkörpers 20 verloren geht. Danach wird der Körner 28 zurückgezogen und die Auswerfer 27 ausgefahren, wobei der fertig bearbeitete Teil 14 vom Dorn 1 geschoben wird. (Fig. 7) Danach kann der nächste Teil 14 auf den Dorn 1 aufgeschoben werden.

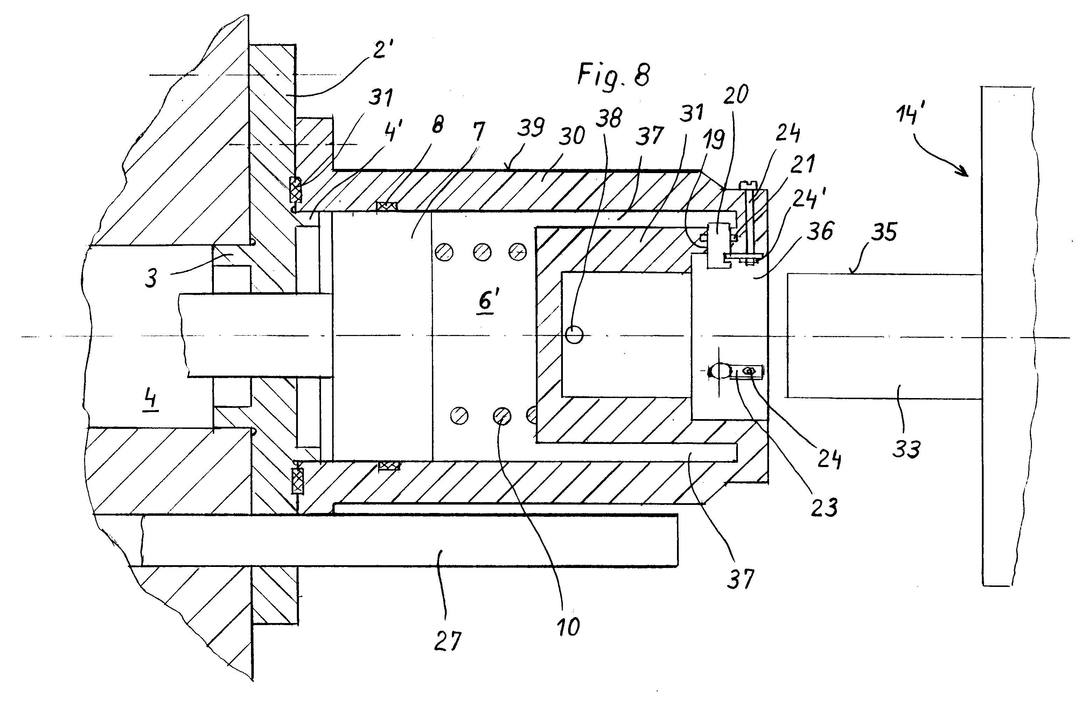

Die Fig. 8 zeigt eine Haltevorrichtung für die Aufnahme von Achsstummeln 33 aufweisenden Teilen 14′. diese Haltevorrichtung ist zweiteilig ausgebildet, wobei die Aufspannplatte 2′, einerseits mit einem Zentrieransatz 3 in eine entsprechende Bohrung 4 einer Werkzeugmaschine eingreift und mit einem weiteren Zentrieransatz 4′ in eine Haube 30 eingreift, die unter Zwischenlage einer Dichtung 31 mit der Aufspannplatte 2′ mittels Schrauben verbunden ist.

Dies Haube 30 weist eine zylindrische Bohrung 6′ auf, in der der Kolben 7 verschiebbar ist, der mittels der Dichtung 8 gegen die Wand der Bohrung 6′ abgedichtet ist.

in den Boden 31 der Haube 30 ist eine Bohrung 32 von der freien Stirnseite der Haube 30 her eingearbeitet, die zur Aufnahme des Achsstummels 33 des Teiles 14′ dient. Die zylindrische Mantelfläche 34 dieser Bohrung 32 dient als Paßfläche, die mit der zylindrischen Mantelfläche 35 des Achsstummels 33 z.B. einen Schiebesitz ergibt.

In einer einen größeren Durchmesser als die Bohrung 32 aufweisenden Bohrung 36 sind radial verlaufende, über den Umfang verteilt angeordnete Bohrungen 19 angeordnet, in denen die Druckkörper 20, die in diesen mittels der Dichtung 21 abgedichtet gehalten sind, verschiebbar angeordnet sind.

Diese Bohrungen 19 münden in axial verlaufende Bohrungen 37, die mit der Bohrung 6′ in Verbindung stehen. Die Druckkörper 20 sind, ebenso wie beim Ausführungsbeispiel nach den Fig. 1 bis 3 mit Blattfedern 23, die in Nuten 22 der Druckkörper 20 eingreifen gegen deren zurückgezogenen Stellung vorgespannt. Die Federn 23 sind mittels Schrauben 24 und Muttern 24′ gehalten.

Zum leichteren Einführen des Achsstummels 33 ist die Bohrung 6′ mit einer Ansenkung versehen.

Zum Einspannen des Teiles 14′ wird diese mit seinen Achsstummel 33 in die Bohrung 32 eingesteckt und danach der Kolben 7 entgegen der kraft der Feder 10 weiter eingeschoben und in dieser Stellung gehalten. Dadurch erhöht sich der Druck in der mit einem Fluid, vorzugsweise Drucköl gefüllten Bohrung 6′. dies bewirkt aber, daß sich auch der Druck in den Bohrungen 37 erhöht und daher die Druckkörper 20 gegen das Innere der Bohrung 36 ausgeschoben werden und an der Mantelfläche des Achsstummels 33, bzw. dessen Ansatz 33′ zur Anlage kommen, der weniger genau als die Mantelfläche 35 bearbeitet sein kann. Dadurch wird ein entsprechender Reibungsschluß zwischen den Druckkörpern 20 und dem Ansatz 33′ sichergestellt, der auch die Übertragung eines erheblichen Drehmomentes ermöglicht. Um das

Nach der Bearbeitung und dem Zurückziehen des Kolbens 7 kann der Teil 14′ mit den Auswerfern 27 ausgestoßen werden.

Zur Erleichterung des Einsteckens und Ausschiebens des Achsstummels 33 in bzw. aus der Bohrung 32 der Haube 30, ist im Endbereich der Bohrung 32 eine radial verlaufende Bohrung 38 vorgesehen, die an der äußeren Mantelfläche 39 der Haube 30 offen ist und eine Luftzirkulation ermöglicht.

## Patentansprüche

1. Haltevorrichtung für drehfest einzuspannende Teile, insbesondere Werkstücke oder Werkzeuge, welche Haltevorrichtung eine Zylindermantelfläche (15, 43) aufweist, die im wesentlichen gegengleich zu Abschnitten einer Zylindermantelfläche (16, 35) des zu haltenden Teiles (14, 14′) ausgebildet ist, wobei die Haltevorrichtung Druckkörper (20) aufweist, die in Bohrungen (19) gehalten, gegen deren Wände abgedichtet und gegen die Zylindermantelfläche (16, 35) des zu haltenden Teiles (14, 14′) verschiebbar sind, welche Bohrungen (19) in Umfangsrichtung der Haltevorrichtung über diese verteilt angeordnet sind und die Bohrungen (19) mit einem von einem Druckmedium erfüllten Raum (6) verbunden sind, **dadurch gekennzeichnet**, daß zumindest ein Bereich der Zylindermantelfläche (15, 34) der Haltevorrichtung, der sich im wesentlichen über den gesamten Kreisumfang erstreckt und gegengleich zu einem Abschnitt der Zylindermantelfläche (16, 35) des zu haltenden Teiles (14, 14′) ausgebildet ist, als Paßfläche für den entsprechenden Abschnitt der Zylindermantelfläche (16, 34) des zu haltenden Teiles (14, 14′) ausgebildet ist.

2. Haltevorrichtung nach Anspruch 1, **dadurch gekennzeichnet**, daß die Bohrungen (19), in denen die Druckkörper (20) gehalten sind, in einem Bereich der Haltevorrichtung vorgesehen sind, der dem als Paßfläche ausgebildeten Bereich der Mantelfläche (15, 34) benachbart ist.

3. Haltevorrichtung nach Anspruch 1 oder 2, bei der die Druckköper über die sie umgebende Mantelfläche herausragen, **dadurch gekennzeichnet**, daß die Druckkörper (20) eine in ihrer Mantelfläche eingearbeitete Nut (22) aufweisen, in die ein Blechstreifen (23) eingreift.

4. Haltevorrichtung nach einem der Ansprüche 1 bis 3, **dadurch gekennzeichnet**, daß ein Anschlag zur Begrenzung der Überdeckung des zu haltenden Teiles (14, 14′) und der Haltevorrichtung vorgesehen ist.
